# EUROPEAN PATENT APPLICATION

(11) **EP 4 734 599 A1**
(43) Date of publication of application: **29.04.2026**
(21) Application number: 24852438.1
(22) Date of filing: 01.08.2024
(51) Int. Cl.: H04W 28/02, H04W 72/21, H04W 8/24

(54) **METHOD AND APPARATUS FOR REPORTING REMAINING TIME IN WIRELESS COMMUNICATION SYSTEM**

(30) Priority: 04.08.2023 KR 20230102179; 07.09.2023 KR 20230118940
(71) Applicant: Samsung Electronics Co., Ltd., Suwon-si, Gyeonggi-do 16677 (KR)
(72) Inventor: SUN, Weiping, Suwon-si, Gyeonggi-do 16677 (KR); KANG, Hyunjeong, Suwon-si, Gyeonggi-do 16677 (KR); LEE, Taeseop, Suwon-si, Gyeonggi-do 16677 (KR)
(74) Representative: Gulde & Partner
(86) International application number: PCT/KR2024/095955
(87) International publication number: WO 2025/034085

(57) **Abstract**

The disclosure relates to a 5G or 6G communication system for supporting a higher data transmission rate. According to the present disclosure, a base station can efficiently allocate uplink resources on the basis of information transmitted from a terminal.

## Description

### [Technical Field]

The present disclosure relates to the operations of a terminal and a base station in a mobile communication system. More particularly, the present disclosure relates to a method for enabling a base station to efficiently allocate uplink resources.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advancement of mobile communication systems as described above, there has arisen a need for a UE to report various pieces of information to a base station in order to enable the base station to efficiently allocate uplink resources.

### [Disclosure]

### [Technical Problem]

The present disclosure is to enable a base station to efficiently allocate uplink resources by allowing a UE to transmit various pieces of information to a base station, including information on an amount of data stored in a UE buffer.

### [Technical Solution]

To solve the above-described problems, according to an embodiment of the present disclosure, a method performed by a terminal in a wireless communication system includes receiving, from a base station, a control message including information on a remaining time for triggering a delay status report (DSR) for a logical channel group (LCG), triggering the DSR for the LCG based on the information on the remaining time, - a DSR medium access control (MAC) control element (CE) for the triggered DSR including a remaining time field and a buffer size field -, and transmitting the DSR MAC CE to the base station.

Meanwhile, according to another embodiment of the present disclosure, a method performed by a base station in a wireless communication system includes transmitting, to a terminal, a control message including information on a remaining time for triggering a delay status report (DSR) for a logical channel group (LCG), and receiving, from the terminal, a DSR medium access control (MAC) control element (CE) including a remaining time field and a buffer size field, when the DSR for the LCG is triggered based on the information on the remaining time, in which the remaining time field corresponds to a remaining time of a PDCP discard timer with a shortest remaining time among at least one running PDCP discard timer for any LCG, and the buffer size field corresponds to an amount of data associated with a RLC entity and a PDCP entity determined based on the information on the remaining time.

Meanwhile, according to still another embodiment of the present disclosure, a terminal in a wireless communication system may include a transceiver, and a controller configured to receive, through the transceiver, from a base station, a control message including information on a remaining time for triggering a delay status report (DSR) for a logical channel group (LCG), control triggering of the DSR for the LCG based on the information on the remaining time, - a DSR medium access control (MAC) control element (CE) for the triggered DSR including a remaining time field and a buffer size field -, and control transmission of the DSR MAC CE to the base station through the transceiver.

Meanwhile, according to still another embodiment of the present disclosure, a base station in a wireless communication system may include a transceiver, and a controller configured to transmit, through the transceiver, to a terminal, a control message including information on a remaining time for triggering a delay status report (DSR) for a logical channel group (LCG), control reception, through the transceiver, from the terminal, of a DSR medium access control (MAC) control element (CE) including a remaining time field and a buffer size field, when the DSR for the LCG is triggered based on the information on the remaining time, in which the remaining time field corresponds to a remaining time of a PDCP discard timer with a shortest remaining time among at least one running PDCP discard timer for any LCG, and the buffer size field corresponds to an amount of data associated with a RLC entity and a PDCP entity determined based on the information on the remaining time.

### [Advantageous Effect]

According to an embodiment of the present disclosure, it is possible for a base station to efficiently allocate uplink resources based on information transmitted from a UE.

### [Description of Drawings]

FIG. 1 is a diagram illustrating a structure of an NR system according to an embodiment of the present disclosure.
FIG. 2 is a diagram illustrating a wireless protocol structure in the NR system according to an embodiment of the present disclosure.
FIG. 3 is a diagram illustrating a buffer status of a UE on a per-delay status report (DSR)-logical channel (LCH) basis, including a remaining time of data stored in a buffer and a corresponding amount of the data, according to an embodiment of the present disclosure.
FIG. 4 is a diagram illustrating a reference time for the remaining time, according to an embodiment of the present disclosure.
FIG. 5 is a diagram illustrating a procedure for a base station and a UE to confirm whether the UE supports DSR via RRC signaling and to configure DSR-related configuration, according to an embodiment of the present disclosure.
FIG. 6 is a block diagram illustrating a configuration of a base station according to an embodiment of the present disclosure.
FIG. 7 is a block diagram illustrating a configuration of a terminal according to an embodiment of the present disclosure.
FIG. 8 is a flowchart illustrating an operation of a UE according to an embodiment of the present disclosure.
FIG. 9 is a flowchart illustrating an operation of a base station according to an embodiment of the present disclosure.

### [Mode for Disclosure]

Hereinafter, preferred embodiments of the present disclosure will be described in detail with reference to the accompanying drawings. It should be noted that like reference numerals denote like components in the accompanying drawings. Moreover, detailed descriptions related to well-known functions or configurations will be ruled out in order not to unnecessarily obscure the subject matter of the present disclosure.

In describing the embodiments of the present disclosure, descriptions of technical contents that are well known in the technical field to which the present disclosure pertains and are not directly related to the present disclosure will be omitted. This is to more clearly convey the gist of the present disclosure without ambiguity by omitting unnecessary explanations.

For the same reason, some components in the accompanying drawings are exaggerated, omitted, or schematically illustrated. In addition, the size of each component does not entirely reflect the actual size. The same reference numerals are assigned to the same or corresponding components in each drawing.

Various advantages and features of the present disclosure and methods accomplishing the same will become apparent from the following detailed description of embodiments with reference to the accompanying drawings. However, the present disclosure is not limited to embodiments to be described below, but may be implemented in various different forms, these embodiments will be provided only in order to make the present disclosure complete and allow those skilled in the art to completely recognize the scope of the present disclosure, and the present disclosure will be defined by the scope of the claims. Throughout the specification, like reference numerals denote like components.

In this case, it will be appreciated that each block of a processing flowchart and combinations of the flowcharts may be executed by computer program instructions. Since these computer program instructions may be mounted in a processor of a general-purpose computer, a special-purpose computer, or other programmable data processing apparatuses, these computer program instructions executed through the processor of the computer or other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory may also produce manufacturing articles including instruction means performing the functions described in the block(s) of the flowchart. Since the computer program instructions may also be mounted on the computer or other programmable data processing apparatuses, the instructions performing a series of operation steps on the computer or other programmable data processing apparatuses to create processes executed by the computer, thereby executing the computer or other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

In this case, the term '~unit' used in the present embodiment means software or hardware components such as field programmable gate array (FPGA) or application specific integrated circuit (ASIC), and the '~unit' performs certain roles. However, the '~unit' is not meant to be limited to the software or hardware. The '~unit' may be configured to be stored in a storage medium that can be addressed or may be configured to reproduce one or more processors. Accordingly, as an example, the '~unit' includes components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit." In addition, components and '~ units' may be implemented to reproduce one or more CPUs in a device or a secure multimedia card.

Hereinafter, a base station is an entity that performs resource assignment of a terminal, and may be at least one of a Node B, a base station (BS), an eNode B (eNB), a gNode B (gNB), a wireless access unit, a base station controller, or a node on a network. The terminal may include user equipment (UE), a mobile station (MS), 5G UE, a cellular phone, a smartphone, a computer, or a multimedia system capable of performing a communication function. In addition, the embodiment of the present disclosure may be applied to other communication systems with similar technical backgrounds or channel formats to the embodiment of the present disclosure described below. In addition, the embodiment of the present disclosure may be applied to other communication systems through certain modifications, as determined by those skilled in the art, without significantly departing from the scope of the present disclosure. For example, the 5th generation (5G) mobile communication technology (new radio, NR) developed after LTE-A may be included in such other communication systems, and the 5G below may also be a concept that includes the existing LTE, LTE-A, and other similar services. In addition, the present disclosure may be applied to other communication systems through certain modifications, as determined by those skilled in the art, without significantly departing from the scope of the present disclosure.

In the following description, terms used to identify access nodes, terms referring to network entities or network functions (NFs), terms referring to messages, terms referring to interfaces between network entities, terms referring to various pieces of identification information, etc., are examples for convenience of description. Accordingly, the present disclosure is not limited to terms described below, and other terms referring to objects having equivalent technical meanings may be used.

For convenience of description below, some terms and names defined in the 3rd generation partnership project (3GPP) long term evolution (LTE) standard and/or 3GPP NR (new radio) standard may be used. However, the present disclosure is not limited to the terms and names, and may be equally applied to systems conforming to other standards.

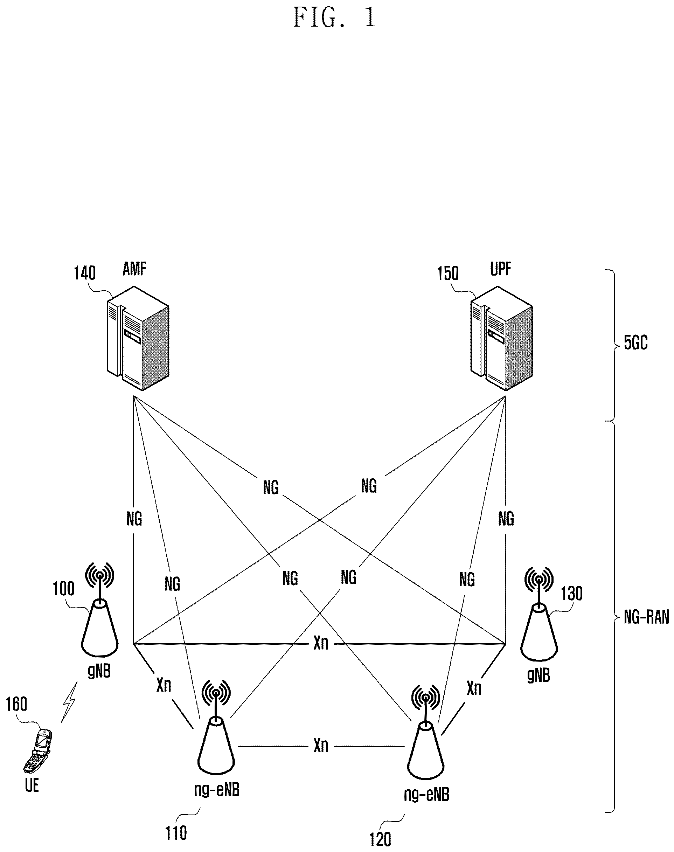

FIG. 1 is a diagram illustrating a structure of an NR system according to an embodiment of the present disclosure.

Referring to FIG. 1, a wireless communication system may be configured to include a plurality of base stations (e.g., gNB 100, ng-eNB 110, ng-eNB 120, and gNB 130), an access and mobility management function (AMF) 140, a user plane function (UPF) 150, etc. Of course, the wireless communication system is not limited to the configuration illustrated in FIG. 1 and may include more or fewer components.

According to an embodiment of the present disclosure, a user equipment (UE or terminal) 160 may access an external network via the base stations 100, 110, 120, and 130 and the UPF 150.

In FIG. 1, the base stations 100, 110, 120, and 130 are access nodes of a cellular network and provide wireless access to UEs accessing the network. For example, the base stations 100, 110, 120, and 130 may collect status information, such as buffer status, available transmit power status, and channel status, of the UEs 160 to serve traffic of users, and perform scheduling based on the collected information to support connections between the UEs and a core network (CN) (specifically, a CN of NR is referred to as 5GC).

In FIG. 1, the gNBs 100 and 130 may control multiple cells and apply an adaptive modulation & coding (hereinafter, referred to as AMC) scheme that determines a modulation scheme and a channel coding rate according to the channel status of the UE 160.

The core network is an apparatus that is responsible for various control functions as well as a mobility management function for a UE, and may be connected to the plurality of base stations 100, 110, 120, and 130. Furthermore, the 5GC may also be linked with the existing LTE system.

Meanwhile, in the wireless communication system, a user plane (UP) related to transmission of actual user data and a control plane (CP) for connection management and the like may be configured separately. The gNB 100 and the gNB 130 in FIG. 1 may use the UP and CP technologies defined in the NR technology, and the ng-eNB 110 and the ng-eNB 120 are connected to the 5GC, but may use the UP and CP technologies defined in the long term evolution (LTE) technology.

The AMF 140 is an apparatus that is responsible for various control functions as well as the mobility management function for the UE 160, and may be connected to the plurality of base stations 100, 110, 120, and 130.

The UPF 150 may refer to a kind of gateway apparatus that provides data transmission. Although not illustrated in FIG. 1, the NR wireless communication system may also include a session management function (SMF). The SMF may manage a packet data network connection, such as a protocol data unit (PDU) session provided to the UE 160.

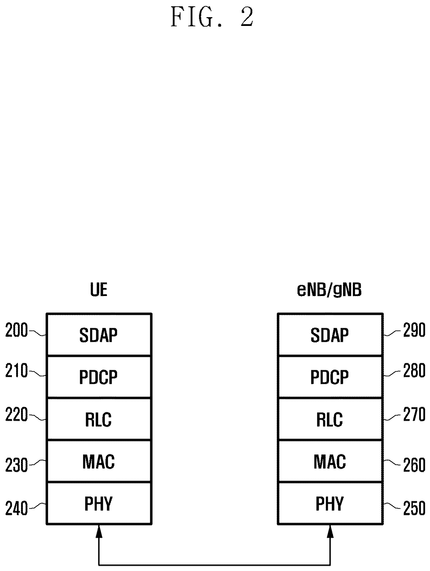

FIG. 2 is a diagram illustrating a wireless protocol structure in the NR system according to an embodiment of the present disclosure.

Referring to FIG. 2, the wireless protocols of the NR system may be composed of service data adaptation protocols (SDAP) 200 and 290, packet data convergence protocols (PDCP) 210 and 280, radio link control (RLC) 220 and 270, medium access control (MAC) 230 and 260, and physical (PHY) 240 and 250 in the UE and the base station, respectively.

The service data adaptation protocols (SDAP) 200 and 290 may transmit user data, and perform an operation of mapping a quality of service (QoS) flow to specific data radio bearer (DRB) for uplink and downlink, an operation of marking a QoS flow identifier (ID) for uplink and downlink, and an operation of mapping a reflective QoS flow to data bearers for uplink SDAP PDUs. The SDAP configurations corresponding to each DRB may be provided from a higher RRC layer. Of course, the present disclosure is not limited to the above examples.

The packet data convergence protocols (PDCP) 210 and 280 may be responsible for operations such as Internet protocol (IP) header compression/decompression. Furthermore, the PDCP 210 and 280 may provide in-sequence and out-of-sequence delivery functions, and provide a reordering function, a duplicate detection function, a retransmission function, and an encryption, and decryption function. Of course, the present disclosure is not limited to the above examples.

The radio link control 220 and 270 may reconfigure a PDCP protocol data unit (PDCP PDU) to an appropriate size. Furthermore, the RLCs 220 and 270 may provide in-sequence and out-of-sequence delivery functions and provide an automatic repeat request (ARQ) function, a concatenation, segmentation, and reassembly function, a resegmentation function, a reordering function, a duplicate detection function, and an error detection function. Of course, the present disclosure is not limited to the above examples.

The MACs 230 and 260 may be connected to multiple RLC layer entities configured in one UE, and perform an operation of multiplexing the RLC PDUs into the MAC PDUs and demultiplexing the RLC PDUs from the MAC PDUs. In addition, the MACs 230 and 260 may provide a mapping function, a scheduling information reporting function, a hybrid ARQ (HARQ) function, a priority control function between logical channels, a priority control function between UEs, an MBMS service confirmation function, a transmission format selection function, and a padding function. Of course, the present disclosure is not limited to the above examples.

The physical (PHY) layers 240 and 250 perform operations of channel-coding and modulating higher layer data, and converting the higher layer data into orthogonal frequency division multiplexing (OFDM) symbols and transmitting the OFDM symbols via a wireless channel or demodulating and channel-decoding the OFDM symbols received via the wireless channel and delivering the OFDM symbols to the higher layer. In addition, the hybrid ARQ (HARQ) is used even at the physical layer for additional error correction. A receiving end transmits, in 1 bit, information indicating whether a packet transmitted from a transmitting end has been received. The 1-bit information is called HARQ acknowledgement (ACK)/negative ACK (NACK) information.

For the LTE, downlink HARQ ACK/NACK information for uplink data transmission is transmitted via a physical hybrid-ARQ indicator channel (PHICH). For the NR, it may be determined whether retransmission is required or a new transmission is to be performed based on UE scheduling information transmitted via a physical dedicated control channel (PDCCH), which is used to transmit downlink/uplink resource allocation information, etc. This is because the NR employs asynchronous HARQ. Uplink HARQ ACK/NACK information for downlink data transmission may be transmitted via a physical uplink control channel (PUCCH) or a physical uplink shared channel (PUSCH). The PUCCH is generally transmitted on an uplink of a primary cell (PCell) to be described below; however, when a UE supports PUCCH transmission on a secondary cell (SCell) to be described below, a base station may allow the UE to additionally transmit the PUCCH on the SCell, which is referred to as a PUCCH SCell.

Although not illustrated in FIG. 2, the radio resource control (RRC) layer is present above the PDCP layer in each of the UE and the base station. The RRC layer may transmit and receive access and measurement-related configuration control messages for radio resource control.

Meanwhile, the physical layer may be composed of one or more frequencies/carriers. A technology for simultaneously configuring and using multiple frequencies is called a carrier aggregation (hereinafter, referred to as CA) technology. The CA technology additionally uses a primary carrier and one or more subcarriers for communication between a terminal (or user equipment (UE)) and a base station (eNB or gNB) to dramatically increase transmission capacity by the number of subcarriers, rather than using only one carrier for communication between the UE and the base station. Meanwhile, in the LTE/NR, a cell within a base station that uses a primary carrier is referred to as a primary cell (PCell), and a cell within a base station that uses a secondary carrier is referred to as a secondary cell (SCell).

In the next-generation/5G (new radio (NR)) wireless communication systems, a UE need to report a buffer status to a base station to help the base station more efficiently schedule resources. A buffer status report (BSR) is used to represent and report the amount of data stored in the UE buffer. According to the NR specifications, the UE selects, from a buffer size table, a segment index that includes the amount of buffer data to be reported in the range of data amount per segment defined for each index, and includes the selected segment index in the BSR.

The buffer status report in the NR systems may be performed based on medium access control (MAC) layer signaling between the UE and the base station. For example, when the BSR is triggered at a specific transmission point in time, the UE may transmit a BSR control element (MAC CE) to the base station by including the BSR MAC CE in the MAC PDU. In this case, the BSR control element indicates, in units of logical channel groups (hereinafter, referred to as LCG), the amount of packets remaining in the transmission buffer of the UE after the corresponding MAC PDU is assembled. The base station may estimate the amount of data currently remaining in the UE buffer using the received BSR. In the NR system, the UE may manage the data transmission buffer to be transmitted to the base station on a per-eight LCGs basis.

Extended reality (XR) uplink data includes a valid deadline time (delay budget), such as the remaining time which is the residual valid deadline. When data should arrive at the uplink server within the predetermined remaining time based on the time generated by an application layer of the UE, the corresponding data may be used as valid data. When data fails to arrive at the uplink server within the specified remaining time, the corresponding data loses its application value. The UE buffer size reported via the BSR is designed to report the total amount of data stored in the UE buffer. However, the base station does not know how much of the total data is closer to the deadline, for example, whether the remaining time is short. When the base station knows the remaining time of data in the UE buffer and the amount of data corresponding to each remaining time, the base station may reflect the remaining time and the amount of data when performing the uplink resource allocation so as to first transmit data with a relatively shorter remaining time. Accordingly, more data may be transmitted before the remaining time expires, thereby improving the cell capacity. On the other hand, when specific data is data with a very short remaining time, the time from when the data is reported via the BSR until the time when the data is actually transmitted may be shorter than the remaining time. In this case, the corresponding data may be transmitted after it has already lost its application value or may already be discarded before it is transmitted. Accordingly, the allocated uplink resources may not contain valid data, resulting in resource waste. When the information reported to the base station includes a remaining time that satisfies a predefined remaining time criterion (upper limit or lower limit) or includes the remaining time and the amount of data, the base station may utilize the information when allocating the uplink resources to the UE, thereby enabling more efficient resource allocation.

According to an embodiment of the present disclosure, there is provided a method for reporting the remaining time of data stored in the transmission buffer of the UE and the amount of data corresponding to the remaining time to the base station and utilizing the remaining time and the amount of data for the uplink scheduling of the base station.

The UE may trigger the buffer status report (BSR) in the corresponding cell group when one of the following conditions is satisfied:
- Condition 1-1: New uplink (UL) data is generated on a logical channel (LCH) belonging to a logical channel group (LCG). In this case, when the priority of the corresponding LCH is higher than that of other LCHs where UL data is present. In this case, the triggered regular BSR may be considered to have been triggered by the LCH where new UL data has been generated.
- Condition 1-2: When new uplink (UL) data has been generated on the logical channel (LCH) belonging to the logical channel group (LCG), and the UL data is not present on all LCHs belonging to all the LCGs before the corresponding UL data has been generated. In this case, the triggered regular BSR may be considered to have been triggered by the LCH where new UL data has been generated.
- Condition 1-3: When retxBSR-Timer expires, if the UL data is present on at least one LCH, and the corresponding LCH belongs to the LCG. In this case, the triggered regular BSR may be considered to have been triggered by the LCH with the highest priority among the LCHs where the UL data is present.

In an embodiment of the present disclosure, when the logicalChannelSR-DelayTimer of the LCH that has triggered the corresponding regular BSR is not running in the state in which the regular BSR has already been triggered, the UE may trigger a scheduling request (SR) corresponding to the corresponding LCH for the regular BSR when one of the following conditions is satisfied.
- Condition 2-1: When there are no uplink shared channel (UL-SCH) resources for initial transmission (or new transmission)
- Condition 2-2: When a configured grant(s) is configured for the MAC entity, and the LCH that has triggered the regular BSR has logicalChannelSR-Mask configured to false, or
- Condition 2-3: When there are UL-SCH resources for initial transmission, but the UL-SCH resources may not be used for the logical channel (LCH) that has triggered the regular BSR due to a logical channel prioritization (LCP) mapping restriction.

The logicalChannelSR-Mask may be a parameter that controls SR triggering when the configured grant is configured.

In an embodiment of the present disclosure, a UE may report the remaining time status of data in the transmission buffer to the base station via a specific MAC CE. For example, the MAC CE may be referred to as a delay status report (DSR) MAC CE.

According to an embodiment of the present disclosure, the DSR MAC CE may be an extended MAC CE of the BSR MAC CE. For example, the DSR MAC CE may include, on a per-LCG basis, a buffer size that is reported in the BSR MAC CE. For example, the DSR MAC CE may include, on a per-LCG basis, information indicating the presence or absence of a LCG buffer size field included in the BSR MAC CE.

According to an embodiment of the present disclosure, the DSR MAC CE may not include information included in the BSR MAC CE, separate from the BSR MAC CE.

According to an embodiment of the present disclosure, in relation to the DSR, the base station may configure at least one of the following information for a specific MAC entity (or cell group) of the UE via the RRC message:
- Whether the remaining time is reported may be configured on a per-LCH basis. According to an embodiment, the LCH reporting the remaining time may be referred to as dsr-lch.
- DSR reporting remaining time criterion may be configured. The corresponding criterion may be the remaining time upper limit or lower limit, or the remaining time upper limit or lower limit. For example, when the remaining time upper limit is configured, the UE may report the remaining time for data whose remaining time is less than or equal to the configured remaining time upper limit. For example, when the remaining time lower limit is configured, the UE may report the remaining time for data whose remaining time is greater than or equal to the configured remaining time lower limit. For example, when the remaining time upper limit or lower limit are configured, the UE may report the remaining time for data whose remaining time is greater than or equal to the lower limit and less than or equal to the upper limit. For example, one or more remaining time criteria may be configured on a per-LCH basis, on a per-LCG basis, on a per-MAC entity basis, or on a per-UE basis.
- The upper limit on the number of remaining time fields may be configured. For example, the upper limit on the number of pairs of remaining time fields and remaining time-specific buffer size fields may be configured. The upper limit on the number may be configured on a per-LCH basis, on a per-LCG basis, or for the entire DSR MAC CE. When the upper limit on the number of fields is configured, the DSR may include, on a per-LCH basis, on a per-LCG basis, or for the entire DSR, the number of remaining time fields or pairs of remaining time field and a remaining time-specific buffer size field that is less than or equal to the upper limit on the number configured by the base station.
- The DSR trigger remaining time criterion may be configured. For example, the DSR trigger remaining time criterion may be the remaining time upper limit or lower limit, or the remaining time upper limit or lower limit. The DSR trigger remaining time criterion may be configured on a per-LCH basis, on a per-LCG basis, on a per-MAC entity basis, or on a per-UE basis. For example, when the DSR trigger remaining time criterion is not separately configured, the DSR trigger remaining time criterion may be determined by directly applying the DSR report remaining time criterion of the corresponding LCH/LCG/MAC entity/cell group/UE, or by introducing a specific offset. The corresponding offset may be determined in advance or may be configured by the base station via the RRC.

According to an embodiment, all remaining time-related values/fields/variables/parameters of the present disclosure may be expressed in the form of integers having a specific time unit. The corresponding integers may represent an absolute time or a relative time with respect to a specific point in time. For example, the time unit may be one or more composite forms among units such as microseconds, milliseconds, seconds, symbols, subframes, and frames.

According to an embodiment, a pre-defined remaining time table may be specified in the specification, such that each index/codepoint included in the corresponding table may be defined to be able to indicate a specific remaining time interval. Different indexes/codepoints in the remaining time table may indicate other remaining time intervals that do not overlap with each other. The maximum remaining time included in the corresponding table may be equal to a maximum value of discardTimer configured in PDCP-Config of the 38.331 standard, or may be a value having a specific offset from the corresponding maximum value. The last index/codepoint in the corresponding table may indicate all time intervals greater than or equal to the maximum remaining time. For example, when the remaining time table includes 2^{k} index/codepoints, or includes the number of index/codepoints that is less than or equal to 2^{k} but greater than 2^{k-1} the remaining time field or the minimum remaining time field of the DSR may have a length of k bits.

According to an embodiment, all remaining time-related values/fields/variables/parameters of the present disclosure may be expressed by a specific index/codepoint of the remaining time table. For example, when the value indicated by the remaining time field of the DSR or the remaining time upper limit or lower limit configured by the base station is t, this may mean the index/codepoint t of the remaining time table.

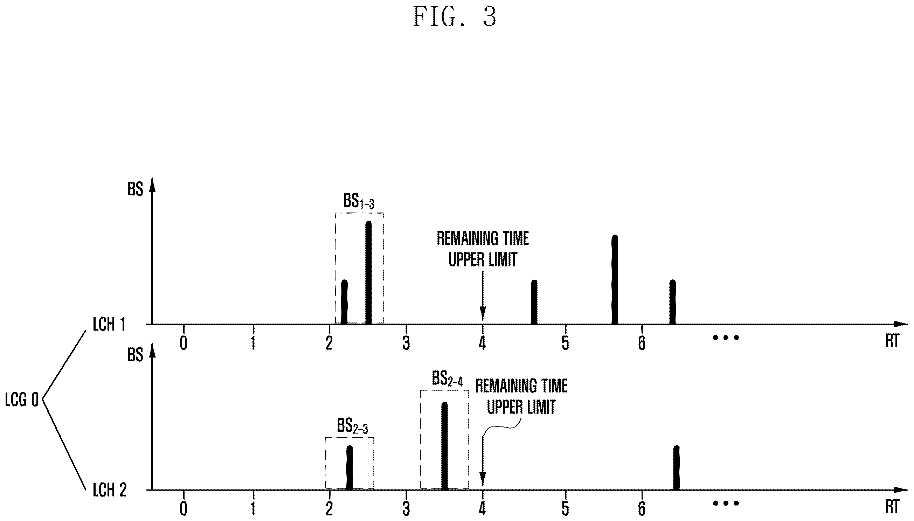

FIG. 3 is a diagram illustrating a buffer status of a UE on a per-dsr-lch basis, including a remaining time of data stored in a buffer and a corresponding amount of the data, according to an embodiment of the present disclosure.

According to an embodiment, the UE may report, via the DSR, the remaining time status of data in the corresponding LCH buffer, LCG buffer, or MAC entity/cell group buffer, on a per-dsr-lch basis, on a per-LCG basis including at least one dsr-lch, or on a per-MAC-entity/cell-group basis including at least one dsr-lch. The remaining time status may indicate a corresponding remaining time interval by adding a remaining time field on a per-remaining time minimum granularity basis when corresponding data is present.

The minimum remaining time granularity may be an interval indicated by each index/codepoint when the remaining time field indicates an index/codepoint in a remaining time table, or may be a corresponding time unit when the remaining time field indicates an integer having a specific time unit.

According to an embodiment, the remaining time, remaining time-specific buffer size, or on-demand buffer size reported via the DSR may be reported only for data remaining in a specific LCH/LCG/MAC entity/cell group buffer, excluding data included in the MAC PDU after the MAC PDU including the DSR MAC CE is assembled.

The DSR MAC CE may include one or more of the following information:
- LCH or LCG Indicator
   1) The LCG/LCH ID field or a bit at a specific location in the bitmap may indicate the corresponding LCG/LCH. For example, the LCG/LCH indicator may be used to indicate the presence or absence of the remaining time field corresponding to the corresponding DSR MAC CE, a minimum remaining time field, a pair of (minimum) remaining time field and corresponding remaining time-specific buffer size field, or an on-demand buffer size field.
- Remaining time field
   1) When the base station configures only the remaining time criterion on a per-LCH basis, on a per-LCG basis, or for the entire MAC entity/cell group and does not configure the upper limit on the number of remaining time fields:
      2) The UE may indicate, on a per-LCH basis, on a per-LCG basis, or for the entire MAC entity/cell group, the corresponding remaining time interval, by adding the corresponding remaining time field on a per-minimum remaining time granularity basis, when there is data corresponding to the buffer, only for the remaining time of data satisfying the remaining time criterion among the data in the corresponding (one or more) dsr-lch buffers. Referring to FIG. 3, as an example, when the base station configures the remaining time upper limit for both LCH1 and LCH2 to 4 and the remaining time reporting is performed on a per-LCG basis, there may be two remaining time fields corresponding to LCG 0 (including LCH 1 and LCH 2), one remaining time field may indicate remaining time 3 (reflecting BS₁₋₃ of LCH 1 and BS₂₋₃ of LCH 2), and the other may indicate remaining time 4 (reflecting BS₂₋₄ of LCH 2).
   1) When the base station configures both the remaining time criterion and the upper limit on the number of remaining time fields on a per-LCH basis, on a per-LCG basis, or for the entire MAC entity/cell group.
      2) The UE may indicate, on a per-LCH basis, on a per-LCG basis, or for the entire MAC entity/cell group, the corresponding remaining time interval, by adding the corresponding remaining time field on a per-minimum remaining time granularity basis, when there is data corresponding to the buffer, only for the remaining time of data satisfying the remaining time criterion among the data in the corresponding (one or more) dsr-lch buffers. For example, the number of remaining time fields on a per-LCH basis, on a per-LCG basis, or on a per-MAC entity/cell group basis may be present up to the upper limit or (the upper limit -1) on the number of remaining time fields configured by the base station on a per-LCH basis, on a per-LCG basis, or on a per-MAC entity/cell group basis. For example, the remaining time fields may be added in increasing order of remaining time, starting from the remaining time field with the shortest remaining time. Referring to FIG. 3, as an example, when the base station configures the remaining time upper limit for both LCH 1 and LCH 2 to 4, and configures the upper limit on the number of remaining time fields for LCG 0 to 1, there may be one remaining time field corresponding to LCG 0, which may indicate remaining time 3 (reflecting BS₁₋₃ of LCH 1 and BS₂₋₃ of LCH 2).
   1) When the base station does not configure the remaining time criterion on a per-LCH basis, on a per-LCG basis, or for the entire MAC entity/cell group and configures only the upper limit on the number of remaining time fields:
      2) The UE may indicate, on a per-LCH basis, on a per-LCG basis, or for the entire MAC entity/cell group, the remaining time interval by adding the corresponding remaining time field on a per-minimum granularity basis, when there is the corresponding data among the data in the corresponding (one or more) dsr-lch buffers. For example, the number of remaining time fields on a per-LCH basis, on a per-LCG basis, or on a per-MAC entity/cell group basis may be present up to the upper limit or (the upper limit -1) on the number of remaining time fields configured by the base station on a per-LCH basis, on a per-LCG basis, or on a per-MAC entity/cell group basis. For example, the remaining time fields may be added in increasing order of remaining time, starting from the remaining time field with the shortest remaining time. Referring to FIG. 3, as an example, when the base station configures the remaining time upper limit for LCH 0 to 1, and the remaining time reporting is performed on a per-LCG basis, there may be one remaining time field corresponding to LCG 0, which may indicate remaining time 3 (reflecting BS₁₋₃ of LCH 1 and BS₂₋₃ of LCH 2).
- Minimum remaining time field: The UE may indicate, on a per-LCH basis, on a per-LCG basis, or for the entire MAC entity/cell group, the corresponding remaining time interval by adding the corresponding remaining time field, for the corresponding remaining time interval to which the remaining time interval of the data with the shortest remaining time among the data in the corresponding (one or more) dsr-lch buffers belongs. The remaining time field may be referred to as a minimum remaining time field. For example, the minimum remaining time field may be added only when the corresponding remaining time interval satisfies the remaining time criterion configured by the base station when the base station configures the remaining time criterion. Referring to FIG. 3, as an example, when the base station configures the remaining time upper limit for LCG 0 to 4 and the remaining time reporting is performed on a per-LCG basis, LCG 0 may have one minimum remaining time field, and the corresponding field may indicate the remaining time 3.
   1) (Minimum) remaining time-specific buffer size field: When there are one or more remaining time fields corresponding to a specific LCH/LCG/MAC entity/cell group, or when there is a minimum remaining time field corresponding to a specific LCH/LCG/MAC entity/cell group, a (minimum) remaining time-specific buffer size field may be additionally included, on a per-remaining time basis or on a per-minimum remaining time field basis, to indicate how much data having the remaining time belonging to the remaining time interval indicated by the corresponding field is present in the corresponding LCH/LCG/MAC entity/cell group buffer. Referring to FIG. 3, as an example, when the remaining time upper limit configured by the base station for LCG 0 is 4 and the remaining time reporting is performed on a per-LCG basis, the LCG 0 may have two remaining time fields, and corresponding field may indicate remaining times 3 and 4, respectively. As an example, one remaining time-specific buffer size field corresponding to the remaining time field indicating the remaining time 3 may be added. In this case, the corresponding field may indicate BS₁₋₃+BS₂₋₃, which is a buffer size corresponding to the remaining time 3. For example, one remaining time-specific buffer size field corresponding to the remaining time field indicating the remaining time 4 may be added. In this case, the corresponding field may indicate BS₂₋₄, which is a buffer size corresponding to the remaining time 4.
   1) On-demand buffer size field: When the base station configures the remaining time criterion on a per-LCH/LCG/MAC entity/cell group basis, an on-demand buffer size field, which indicates the amount of data satisfying the remaining time criterion configured by the base station among the data in the corresponding (one or more) dsr-lch buffers, may be included. The number of on-demand buffer size fields may be present on a per-LCH/LCG/MAC entity/cell group basis, or on a per-remaining time criterion basis configured by the base station. For example, when the base station configures criterion 1 with the remaining time upper limit of 1 and criterion 2 with upper limit 2 and lower limit 2 for a specific LCH/LCG/MAC entity/cell group, there may be two on-demand buffer size fields corresponding to the corresponding LCH/LCG/MAC entity/cell group. For example, a first on-demand buffer size field may indicate the amount of data with the remaining time that satisfies criterion 1, and a second on-demand buffer size field may indicate the amount of data with the remaining time that satisfies criterion 2.

For example, the (minimum) remaining time-specific buffer size field or the on-demand buffer size field may reference a predefined buffer size table that defines indexes for each buffer size range, and represent the index of the corresponding buffer size range in the corresponding table. The buffer size table may be one of a long BS (buffer size) table for an 8-bit buffer size field defined in the NR system, a short BS table for a 5-bit buffer size field, or one or more new BS tables that may be newly defined in the future. When there are multiple candidate BS tables, a BS table indicator indicating which BS table is referenced by the corresponding (minimum) remaining time-specific buffer size field or on-demand buffer size field may be included in the DSR MAC CE on a per-(minimum)-remaining time-specific buffer size field basis, a per-on-demand buffer size field basis, a per-LCH basis, a per-LCG basis, or a per-MAC entity/cell group basis.

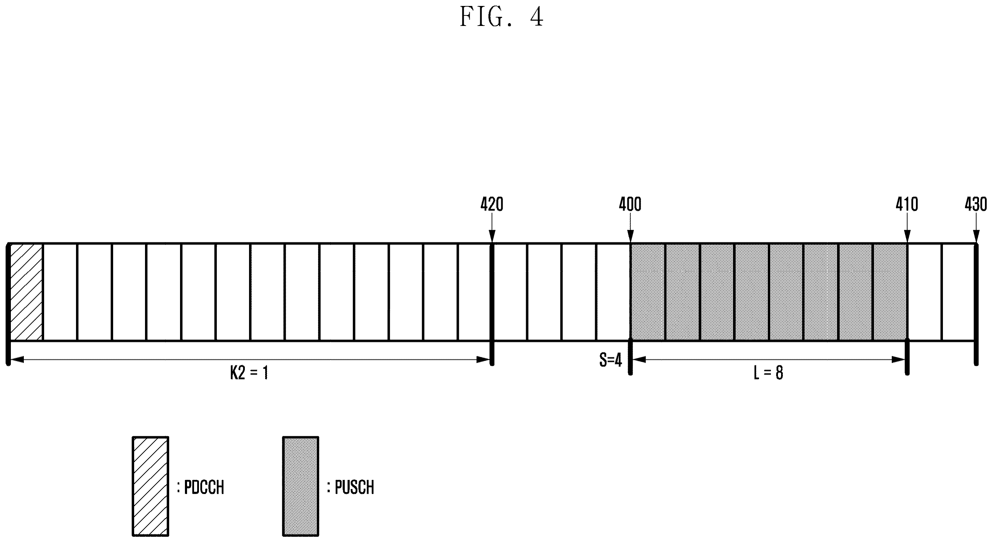

FIG. 4 is a diagram illustrating a reference time for the remaining time that is indicated by the remaining time field or minimum remaining time field of the DSR MAC CE or applied by the on-demand buffer size field, as an embodiment of the present disclosure. According to an embodiment, the reference time for the remaining time may be interpreted as a concept that indicates a time point on which the corresponding remaining time is based.

Referring to FIG. 4, a UE may typically transmit, to a base station, a MAC PDU or transport block (TB) including a DSR MAC CE via PUSCH resources allocated by the base station. According to an embodiment, the base station may allocate specific PUSCH resources to a UE via DCI through dynamic scheduling. Alternatively, multiple periodic PUSCH resources may be allocated to the UE in a configured grant (CG) format. The reference time for the remaining time, which is indicated by the remaining time field or minimum remaining time field of the DSR MAC CE or applied by the on-demand buffer size field, may be one of the following options.
- The start of the first symbol of the PUSCH resource for the initial transmission of the MAC PDU or the TB including the corresponding DSR MAC CE (reference numeral 400)
- The end of the last symbol of the PUSCH resource for the initial transmission of the MAC PDU or the TB including the corresponding DSR MAC CE (reference numeral 410)
- The start of the slot to which the PUSCH resource for the initial transmission of the MAC PDU or TB including the corresponding DSR MAC CE belongs (reference numeral 420)
- The end of the slot to which the PUSCH resource for the initial transmission of the MAC PDU or TB including the corresponding DSR MAC CE belongs (reference numeral 430)

According to an embodiment, the PUSCH resource may be a resource that the base station allocates as a dynamic grant through the dynamic scheduling, or the base station allocates as a configured grant.

According to an embodiment, one or more reference time fields indicating the reference time for the remaining time may be added to the DSR. For example, the reference time field may be a field indicating a point in time based on which the remaining time value indicated by the remaining time field of the DSR or the data indicated by the on-demand buffer size field is calculated. For example, the reference time field may indicate an absolute time or a relative time based on a specific point in time. For example, the reference time field may be expressed as one or a combination of units such as a frame, a subframe, a slot, or a symbol. For example, the reference time field may indicate the entire UTC time or bits/least significant bit (LSB)/most significant bit (MSB) of a specific location/number.

According to an embodiment, the remaining time field of the DSR may be a field indicating a relative difference from a specific remaining time upper limit configured by the base station, rather than the absolute remaining time. For example, the corresponding relative difference may be a value indicating the difference obtained by subtracting the corresponding remaining time from the remaining time upper limit, and when comparing the remaining time upper limit with the corresponding remaining time, a value indicates how many times smaller or larger the remaining time is relative to the remaining time upper limit, or may indicate a percentage of the remaining time with respect to the remaining time upper limit.

According to an embodiment, at a specific point in time, the remaining time of data in the dsr-lch buffer may be equal to the remaining time value of the PDCP discardTimer for the corresponding data at the corresponding point in time, or may be equal to a value obtained by applying a specific offset to the remaining time value of the PDCP discardTimer. The offset may be defined in advance or may be configured by the base station via the RRC.

According to an embodiment, at a specific point in time, the remaining time of the specific PDU included in the specific PDU set may be considered as/configured to/or reconfigured to, at the corresponding point in time, the remaining time of the PDU that has the smallest remaining time among all PDUs included in the corresponding PDU set, or that is first generated in the application, or that arrives first at the PDCP.

According to an embodiment, at a specific point in time, the remaining time of the specific PDU included in the specific PDU set may be considered as/configured to/reconfigured to, at the corresponding point in time, the remaining time of the PDU that has the smallest remaining time among all PDUs included in the corresponding PDU set, or that is first generated in the application, or that arrives first at the PDCP, when the PDU-set integrated handling information (PSIHI) is configured for the corresponding PDU set.

According to an embodiment, at a specific point in time, the remaining time of the specific PDU included in the specific PDU set may be considered as/configured to/reconfigured to a remaining time of a PDU set level PDCP discardTimer of the corresponding PDU set or a value obtained by applying a specific offset configured by the base station to the remaining time, when the PDU set-level PDCP discardTimer is configured for the corresponding PDU set.

According to an embodiment, the condition under which a DSR MAC CE is triggered may include at least one of the following conditions.
- Data satisfying the DSR trigger remaining time criterion is generated in a specific dsr-lch. In this case, when there is no data satisfying the corresponding criterion in all dsr-lch buffers, the DSR MAC CE may be triggered. The data satisfying the DSR trigger remaining time criterion may be generated either due to generation of new data that satisfies the corresponding criterion, or due to the decrease in the remaining time of the existing data such that the corresponding criterion becomes satisfied. For example, the DSR triggered under the above conditions may be referred to as a regular DSR.
- When the data satisfying the DSR trigger remaining time criterion is generated in the specific dsr-lch, and the LCH priority level of the corresponding data is higher than the LCH priority level of other data that satisfies the corresponding criterion, the DSR MAC CE may be triggered. The data satisfying the DSR trigger remaining time criterion may be generated either due to generation of new data that satisfies the corresponding criterion, or due to the decrease in the remaining time of the existing data such that the corresponding criterion becomes satisfied. For example, the DSR triggered under the above conditions may be referred to as a regular DSR.
- When the data satisfying the DSR trigger remaining time criterion is generated in the specific dsr-lch, and the remaining time of the corresponding data is less than or less than or equal to the remaining time of other data that satisfies the corresponding criterion, the DSR MAC CE may be triggered. The data satisfying the DSR trigger remaining time criterion may be generated either due to generation of new data that satisfies the corresponding criterion, or due to the decrease in the remaining time of the existing data such that the corresponding criterion becomes satisfied. For example, the DSR triggered under the above conditions may be referred to as a regular DSR.
- By configuring the DSR retransmission timer (e.g., retxDSR-Timer), when the data satisfying the DSR trigger remaining time criterion is present in at least one dsr-lch at the time the corresponding timer expires, the DSR MAC CE may be triggered. For example, the DSR MAC CE may be triggered only when the dsr-lch in which the data satisfying the corresponding criterion is present belongs to a specific LCG. For example, the retxDSR-Timer may be a separate timer from the retxBSR-Timer (BSR retransmission timer). For example, the retxDSR-Timer may be the same timer as the retxBSR-Timer (BSR retransmission timer). For example, the size of the retxDSR-Timer may be configured by the base station via the RRC on a per-MAC entity/cell group basis. For example, the DSR triggered by the expiration of the retxDSR-Timer may be considered that the LCH having the highest priority among the dsr-lchs in which the data satisfying the DSR trigger remaining time criterion is present is triggered at the time the corresponding timer expires. The corresponding timer may undergo logical channel prioritization (LCP) for available UL-SCH resources, and then may be started/restarted when the UL-SCH resources include the DSR MAC CE and the corresponding subheader. For example, the DSR triggered by the expiration of the timer may be referred to as the regular DSR.
- A periodic DSR timer (e.g., periodicDSR-Timer) may be configured to trigger the DSR MAC CE at the time when the corresponding timer expires. For example, the corresponding timer may be a separate timer from the periodicBSR-Timer (periodic BSR timer). For example, the corresponding timer may be the same timer as the periodicBSR-Timer (periodic BSR timer). For example, the corresponding timer may undergo the logical channel prioritization (LCP) for available UL-SCH resources, and then started/restarted when the UL-SCH resources include the DSR MAC CE and the corresponding subheader, rather than a truncated DSR. For example, the size of the periodicDSR-Timer may be configured by the base station via the RRC on a per-MAC entity/cell group basis. For example, when the size of the corresponding timer is configured to infinity, the corresponding timer may not expire, and thus, the DSR trigger may not occur due to the expiration of the corresponding timer.
- When a padding bit is generated as a result of the LCP for the specific UL-SCH, if the data satisfying the DSR trigger remaining time criterion is present in at least one dsr-lch, the padding DSR transmitted instead of the padding bit may be triggered. For example, the truncated DSR may refer to the DSR MAC CE that transmits only a portion of a DSR field when the padding bits are insufficient to accommodate the entire DSR field in the padding DSR transmitted using the padding bits.

According to an embodiment, when there is at least one regular DSR that has not yet been canceled after being triggered, the SR trigger condition for the corresponding regular DSR may include at least one of the following conditions.
- When there are no available UL-SCH resources for a new transmission.
- When available UL-SCH resources are present, but the corresponding UL-SCH resources may not be used for the LCH that has triggered the corresponding DSR due to the LCP.
- When there are no available UL-SCH resources for the LCH that has triggered the corresponding DSR within a specific time period from the time the corresponding DSR is triggered. The specific time may be defined in advance or may be configured by the base station via the RRC.

According to an embodiment, the base station may configure, via an RRC message, one common SR configuration for the regular DSR triggered by all the dsr-lchs, on a per-specific MAC entity/cell group basis, and may include a SchedulingRequestId (e.g., schedulingRequestID-DSR-r18) for DSR indicating the SR corresponding configuration in the corresponding cell group configuration information.

According to an embodiment, the base station may include a SchedulingRequestId indicating the SR configuration for the regular DSR triggered by the corresponding dsr-lch, on a per-dsr-lch basis, in the configuration information of the corresponding dsr-lch.

The condition under which all DSRs triggered before a specific MAC PDU is assembled, and all SRs triggered by the DSRs, are canceled, and the sr-ProhibitTimers corresponding to the canceled SRs are stopped, may include at least one of the following conditions:
- When the corresponding MAC PDU is transmitted and the UL Grant of the corresponding MAC PDU may accommodate all the pending data in the buffer, but is insufficient to accommodate the additional DSR MAC CE and the corresponding subheader.
- When the corresponding MAC PDU is transmitted, the corresponding MAC PDU includes the DSR MAC CE, and the remaining time status and/or buffer size status reported by the corresponding DSR MAC CE reflect all/most recent all DSR trigger events that have occurred before the corresponding MAC PDU was assembled.
- When the corresponding MAC PDU is transmitted and the corresponding MAC PDU may accommodate all the pending data satisfying the remaining time criterion configured by the base station, but is insufficient to additionally accommodate the DSR MAC CE and the corresponding subheader.
- When there is no data satisfying the remaining time criterion configured by the base station in all the dsr-lchs of the corresponding MAC entity. For example, when the data satisfying the remaining time criterion is generated, a timer having the same size as the remaining time may be configured. When the corresponding timer expires, the corresponding data may be determined to no longer satisfy the remaining time criterion. For example, when the PDCP discardTimer expires, the corresponding data may be considered to no longer satisfy the remaining time criterion.

When there is no valid PUCCH resource, and thus, a random access for a DSR-triggered SR is in progress, the condition under which the corresponding MAC entity may stop the corresponding random access may include at least one of the following conditions.
- When there is a UL Grant allocated through a random access response or by a scheme other than a UL Grant for a MSGA payload, and a MAC PDU including a (new) BSR or DSR MAC CE is transmitted using the UL Grant, and when the corresponding buffer status or remaining time status (delay/remaining time status) is reported for all events that have triggered a (new) BSR or DSR before assembling the corresponding MAC PDU through the (new) BSR or DSR MAC CE, the random access may stop. For example, the random access may stop when all the pending data or all the pending data satisfying the remaining time criterion have been transmitted via the UL grant.
- When there is no data satisfying the remaining time criterion, the random access may stop. For example, the data satisfying the existing remaining time criterion may no longer satisfy the remaining time as the remaining time decreases. For example, the data satisfying the existing remaining time criterion may no longer satisfy the remaining time criterion when the PDCP DiscardTimer expires.

According to an embodiment, when a specific MAC PDU is transmitted, the corresponding MAC PDU includes the DSR MAC CE, and the remaining time status and/or buffer size status reported by the corresponding DSR MAC CE reflect all most recent BSR trigger events that occurred before the corresponding MAC PDU is assembled, all BSRs triggered before the corresponding MAC PDU is assembled and/or the SRs triggered by the BSR may be canceled.

According to an embodiment, by allocating a new LCID or eLCID to the DSR MAC CE, it is possible to indicate that the corresponding MAC CE is the DSR MAC CE using the LCID or eLCID field in the MAC subheader.

According to an embodiment, the priority of the DSR MAC CE may be as follows. (Listed from MAC CE with the highest priority to MAC CE with the lowest priority):
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for SL-BSR prioritized according to clause 5.22.1.6;
- MAC CE for (Extended) BSR, with exception of BSR included for padding;
- MAC CE for DSR, with exception of DSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for BSR included for padding;
- MAC CE for SL-BSR included for padding.
- MAC CE for DSR included for padding;

According to an embodiment, the priority of the DSR MAC CE may be as follows. (Listed from MAC CE with the highest priority to MAC CE with the lowest priority):
- MAC CE for C-RNTI, or data from UL-CCCH;
- MAC CE for (Enhanced) BFR, or MAC CE for Configured Grant Confirmation, or MAC CE for Multiple Entry Configured Grant Confirmation;
- MAC CE for Sidelink Configured Grant Confirmation;
- MAC CE for LBT failure;
- MAC CE for Timing Advance Report;
- MAC CE for DSR, with exception of DSR included for padding;
- MAC CE for SL-BSR prioritized according to clause 5.22.1.6;
- MAC CE for (Extended) BSR, with exception of BSR included for padding;
- MAC CE for (Enhanced) Single Entry PHR, or MAC CE for (Enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (Extended) Pre-emptive BSR;
- MAC CE for SL-BSR, with exception of SL-BSR prioritized according to clause 5.22.1.6 and SL-BSR included for padding;
- MAC CE for IAB-MT Recommended Beam Indication, or MAC CE for Desired IAB-MT PSD range, or MAC CE for Desired DL Tx Power Adjustment;
- data from any Logical Channel, except data from UL-CCCH;
- MAC CE for Recommended bit rate query;
- MAC CE for DSR included for padding.
- MAC CE for BSR included for padding;
- MAC CE for SL-BSR included for padding.

According to an embodiment, when determining a buffer size field value indicating buffer size information of a new BSR MAC CE or DSR MAC CE, when there is at least one candidate BS table that may be referenced, and when indicating the corresponding buffer size among the candidate BS tables, the BS table with the smallest quantization error may be referenced. For example, for each buffer size field/LCH/LCG/MAC CE, an indicator indicating which table among the candidate BS tables was referenced may be included in the corresponding MAC CE for each buffer size field/LCH/LCG/MAC CE. For example, the value of the buffer size field may be 0. For example, the buffer size field may mean a (minimum) remaining time-specific buffer size field , an on-demand buffer size field, or a buffer size field of a (new) BSR MAC CE. For example, the quantization error may mean the difference or the absolute value of the difference between the amount of data actually in the buffer and the upper limit or lower limit of the buffer range indicated by the corresponding index/codepoint of the BS table. For example, the quantization error may refer to the size of the buffer size range indicated by the corresponding index/codepoint of the BS table, i.e., the difference or absolute value of the difference between the upper limit and lower limit.

According to an embodiment, to reduce the quantization error, a new BS table may be defined in addition to the legacy BS table for the existing 8-bit buffer size field and 5-bit buffer size field. For example, the corresponding new BS table may be referred to as NBT. For example, one or more NBTs may be defined in advance. For example, an NBT may have 2^{L} indexes/codepoints. For example, L may be 8, 16, or a number greater than 16. For example, the NBT may divide a predefined specific buffer size range into 2^{L} mutually non-overlapping contiguous intervals, and may define an index/codepoint indicating each interval. For example, each of the 2^{L} intervals may indicate its upper limit or lower limit in the NBT. For example, each of the 2^{L} intervals may have the upper limit of the immediately preceding interval as its lower limit, and the lower limit of the immediately following interval as its upper limit. For example, when there is one NBT, the corresponding NBT may be set as a base NBT; when there are multiple NBTs, one of the NBTs may be set as the base NBT. For example, the base station may configure an NBT that may be referenced by the UE when reporting a BSR, a new BSR, or a DSR. For example, the corresponding configuration may be set for each LCH/LCG/MAC entity/UE.

According to an embodiment, a new NBT composed of a new buffer size range may be configured using a scheme that adds or subtracts a specific common offset to the buffer size range for each index/codepoint of the base NBT. For example, when the buffer size range indicated by a kth index of the base NBT is from Lₖ to Uₖ, when offset +H is applied, the buffer size range indicated by the kth index of the new NBT may be from Lₖ + H to Uₖ + H. For example, the offset may be a positive or negative number.

According to an embodiment, a new NBT may be constructed by a method of multiplying (Bₘᵢₙ x F, Bₘₐₓ x F) or dividing (Bₘᵢₙ/F, Bₘₐₓ/F) the minimum buffer size Bₘᵢₙ and the maximum buffer size Bₘₐₓ included in the Base NBT by a specific scaling factor F, and then dividing the resulting buffer size range into 2^{L} buffer size ranges to correspond to each index/codepoint. The buffer size range may be divided into equal sizes or by applying an exponential function.

According to an embodiment, the selection of the base NBT may be determined by the base station and then notified to the UE via the RRC message or the MAC CE. For example, the selection of the base NBT may be determined by the UE and then reported to the base station via the RRC message or MAC CE.

According to an embodiment, the base station may configure, for the UE, one or more offset values that may be added to or subtracted from the base NBT via the RRC message or the MAC CE. For example, the base station may configure, for the UE, one or more scaling factor values which may be multiplied or divided by the base NBT, via the RRC message or the MAC CE.

According to an embodiment, the UE may include, in a (new) BSR or DSR MAC CE, an indicator indicating which candidate BS table (a legacy BS table or an NBT) is referenced for each buffer size field/LCH/LCG/MAC-entity/UE when determining the value of the corresponding buffer size field. The corresponding indicator may be an index/number of the BS table, or when the corresponding BS table is an NBT obtained by applying a specific offset or scaling factor based on the base NBT, may include an indicator indicating the corresponding offset or scaling factor, or an indicator indicating the index of the corresponding NBT or the applied offset or scaling factor.

According to an embodiment, the MAC layer of the UE may request each of the RLC layer and the PDCP layer of the UE about how much data satisfying the specific remaining time criterion is in the buffer of the corresponding layers. For example, when the UE reports, on a per-LCH/LCG/MAC entity/cell group basis, the amount of data satisfying the specific remaining time criterion, the corresponding amount of data may refer to the total amount of data satisfying the corresponding criterion among the data in the buffers of the RLC and PDCP layers of the corresponding UE, on a per-LCH/LCG/MAC entity/cell group basis.

According to an embodiment, when the MAC of the UE requests the RLC layer for the amount of data satisfying a specific remaining time criterion, the RLC layer may include at least one of the following data when determining the amount of data satisfying the corresponding remaining time criterion.
- RLC SDU and RLC SDU segment that are not yet included in an RLC data PDU and that satisfy the corresponding remaining time criterion.
- RLC data PDU waiting for initial transmission and satisfying the corresponding remaining time criterion.
- In RLC AM mode, RLC data PDUs waiting for RLC retransmission and satisfying the corresponding remaining time criterion.

According to an embodiment, the scheme/method for determining whether a specific RLC SDU/SDU segment/data PDU satisfies a specific remaining time criterion may be determined by the internal implementation of the UE.

According to an embodiment, the determination on whether the specific RLC SDU/SDU segment/data PDU satisfies the specific remaining time criterion may be made based on whether the remaining time of the PDCP DiscardTimer of the corresponding RLC SDU/SDU segment/data PDU satisfies the corresponding remaining time criterion. For example, the determination of how much remaining time is left for the PDCP discardTimer of the RLC SDU/SDU segment/data PDU may be made by the internal implementation of the UE.

According to an embodiment, when the MAC of the UE requests the PDCP layer for the amount of data satisfying a specific remaining time criterion, the PDCP layer may include at least one of the following data when determining the amount of data satisfying the corresponding remaining time criterion.
- PDCP SDU that has not yet assembled the PDCP Data PDU and satisfies the corresponding remaining time criterion.
- PDCP Data PDU that has not yet been delivered to the lower layer (MAC or RLC) and satisfies the corresponding remaining time criterion.
- PDCP SDU that waits for retransmission caused by PDCP entity re-establishment in the AM DRB and satisfies the corresponding remaining time criterion.
- PDCP Data PDU that waits for retransmission caused by PDCP data recovery in the AM DRB and satisfies the corresponding remaining time criterion.

According to an embodiment, when a PDCP entity associated with at least two RLC entities notifies the MAC entity of the amount of DPCP data that satisfies the specific remaining time criterion, the corresponding PDCP entity may be operated as follows:
- For a radio bearer (RB) with PDCP duplication activated:
   1) The amount of data of the corresponding PDCP entity that satisfies the corresponding remaining time criterion may be notified to the MAC entity associated with the primary RLC entity.
   1) The remaining amount of data, excluding PDCP control PDUs, among the data of the corresponding PDCP entity that satisfies the corresponding remaining time criterion may be notified to the MAC entity associated with the RLC entity activated for the remaining PDCP duplication other than the primary RLC entity.
   1) The amount of data that satisfies the corresponding remaining time criterion may be notified as zero to the MAC entity associated with the RLC entity that is deactivated for the PDCP duplication.
- When PDCP duplication is an RB or dual active protocol stack (DAPS) bearer that is deactivated:
   1) When a split secondary RLC entity is configured, and the total amount of PDCP data satisfying the corresponding remaining time criterion and RLC data for initial transmission in the primary RLC entity and split secondary RLC entity are greater than or equal to a specific threshold configured by the base station:
      2) The amount of PDCP data satisfying the corresponding remaining time criterion may be notified to both MAC entities associated with the primary RLC entity and the split secondary RLC entity. For example, the amount of PDCP data satisfying the corresponding remaining time criterion may be notified as 0 to MAC entities associated with RLC entities other than the primary RLC entity and the split secondary RLC entity.
   1) When the corresponding transmitting PDCP entity is a DAPS bearer:
      2) When uplink data switching is not requested:
         3) The amount of PDCP data satisfying the corresponding remaining time criterion may be notified to the MAC entity associated with a source cell.
      2) When uplink data switching is requested:
         3) The amount of PDCP data satisfying the corresponding remaining time criterion may be notified to the MAC entity associated with a target cell.
   1) Other cases:
      2) The amount of PDCP data that satisfies the corresponding remaining time criterion may be notified to the MAC entity associated with the primary RLC entity.
      2) The amount of PDCP data that satisfies the corresponding remaining time criterion may be notified as 0 to the MAC entities associated with other RLC entities, excluding the primary RLC entity.

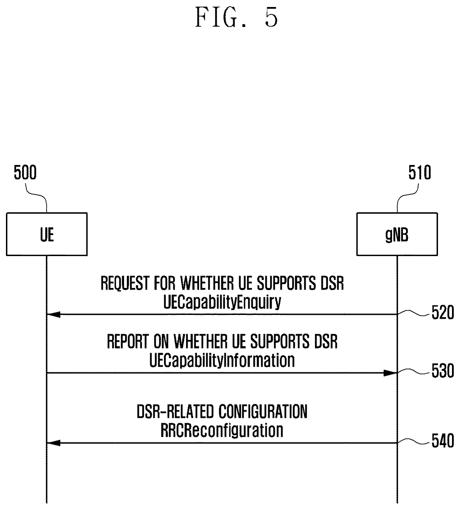

FIG. 5 is a diagram illustrating a procedure for a base station and a UE to confirm whether the UE supports DSR via RRC signaling and to configure DSR-related configuration, according to an embodiment of the present disclosure. Referring to FIG. 5, in step 520, the base station may transfer/transmit a UECapabilityEnquiry message requesting a capability report to a UE in the RRC_CONNECTED state. The base station may include a UE capability enquiry for each radio access technology (RAT) type in the UECapabilityEnquiry message. The UE capability enquiry for each RAT type may include information on the requested frequency band. In addition, when requesting the UE to generate a UECapabilityInformation message via the UECapabilityEnquiry message, the base station may include filtering information that may indicate conditions and restrictions. In this case, the base station may indicate, to the UE, whether the UE is required to report DSR support, based on the filtering information.

In step 530, the UE may construct a UECapabilityInformation message corresponding to the UECapabilityEnquiry message and report a response to the UECapabilityEnquiry message to the base station. In this case, the UECapabilityInformation message may include a parameter/indicator indicating whether the UE supports the DSR. For example, the parameter or indicator may be 1-bit information. According to another embodiment, when the parameter or indicator is included, it may indicate that the DSR is supported, and when the parameter or indicator is not included, it may indicate that the DSR is not supported.

The base station may determine whether the UE supports the DSR based on the received UECapabilityInformation message. When the base station determines that the UE supports the DSR, in step 540, the base station may indicate DSR-related configuration by including the DSR-related configuration in an RRCReconfiguration message. The corresponding UE may apply the DSR-related configuration information included in the received RRCReconfiguration message. The DSR-related configuration may include all DSR-related configurations that the base station may configure for the UE, as described above in the present disclosure.

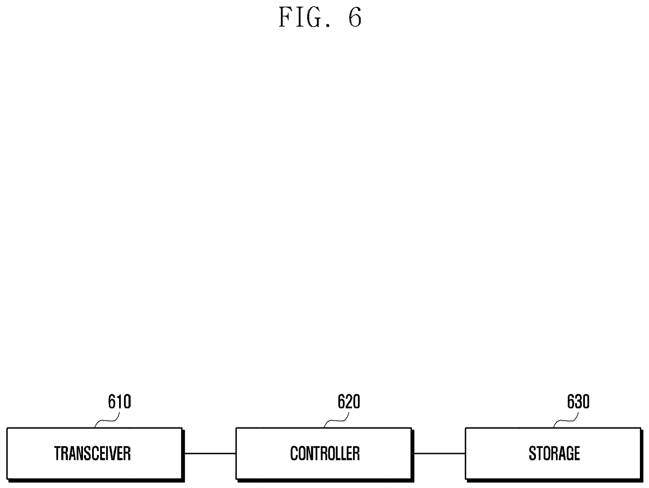

FIG. 6 is a blcok diagram illustrating a configuration of a base station according to an embodiment of the present disclosure. Referring to FIG. 6, the base station may include a transceiver 610, a controller 620, and a storage 630. In the present disclosure, the controller may be defined as a circuit, an application-specific integrated circuit, or at least one processor.

The transceiver 610 may transmit and receive signals to and from other network entities. The transceiver 610 may transmit and receive, for example, an RRC message to and from the terminal. Further, the transceiver 610 may receive a MAC CE from the UE.

The controller 620 may control the overall operation of the base station according to an embodiment of the present disclosure. For example, the controller 620 may control a signal flow between each block to perform operations according to the flowchart described above. Specifically, the controller 620 may configure a DSR trigger remaining time criterion for any MAC entity or cell group of the UE via the RRC message. Alternatively, the controller 620 may control uplink transmission resources to be allocated to a UE based on a DSR MAC CE received from the UE according to an embodiment of the present disclosure.

The storage 630 may store at least one of the information transmitted and received through the transceiver 610 and the information generated by the controller 620. For example, the storage 630 may store information based on the DSR MAC CE received from the UE according to an embodiment of the present disclosure, or information on the uplink transmission resources allocated to the UE.

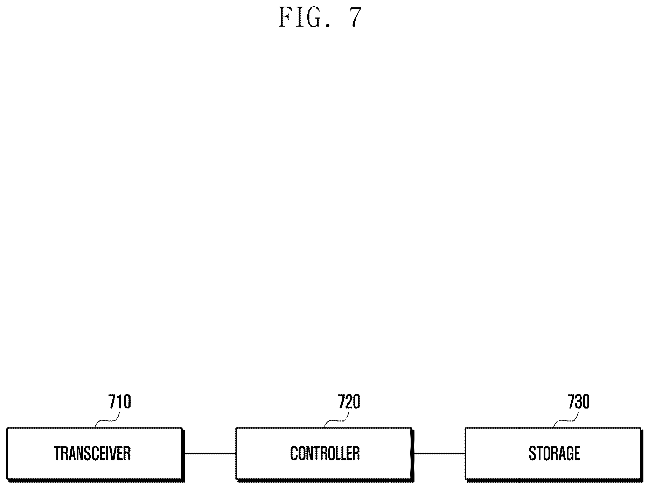

Meanwhile, FIG. 7 is a block diagram illustrating a configuration of a terminal according to an embodiment of the present disclosure. Referring to FIG. 7, the terminal may include a transceiver 710, a controller 720, and a storage 730. In the present disclosure, the controller may be defined as a circuit, an application-specific integrated circuit, or at least one processor.

The transceiver 710 may transmit and receive signals to and from other network entities. The transceiver 710 may transmit and receive, for example, an RRC message to and from the base station. Additionally, the transceiver 710 may transmit a MAC CE to the base station.

The controller 720 may control the overall operation of the terminal according to an embodiment proposed in the present disclosure. For example, the controller 720 may control a signal flow between each block to perform operations according to the flowchart described above. Specifically, according to an embodiment of the present disclosure, the controller 620 may confirm the remaining time of data stored in the transmission buffer of the UE and the amount of data corresponding to the remaining time, and control the UE to report the confirmed remaining time and amount of data to the base station.

The storage 730 may store at least one of the information transmitted and received through the transceiver 710 and the information generated by the controller 720. For example, the storage 730 may store the information based on the DSR MAC CE according to an embodiment of the present disclosure, or the information on the uplink transmission resources allocated from the base station.

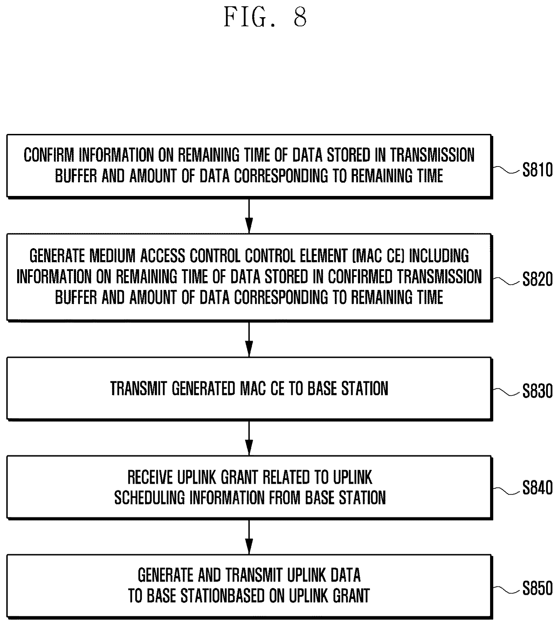

FIG. 8 is a flowchart illustrating an operation of a UE according to an embodiment of the present disclosure.

In step S810, the UE may confirm information on the remaining time of data stored in the transmission buffer and the amount of data corresponding to the remaining time.

In step S820, the UE may generate the MAC CE including information on the remaining time of data stored in the confirmed transmission buffer and the amount of data corresponding to the remaining time. The MAC CE may be referred to as a delay status report (DSR) MAC CE.

In step S830, the UE may transmit the generated MAC CE to the base station.

In step S840, the UE may receive an uplink grant related to uplink scheduling information from the base station.

In step S850, the UE may generate and transmit the uplink data to the base station based on the uplink grant.

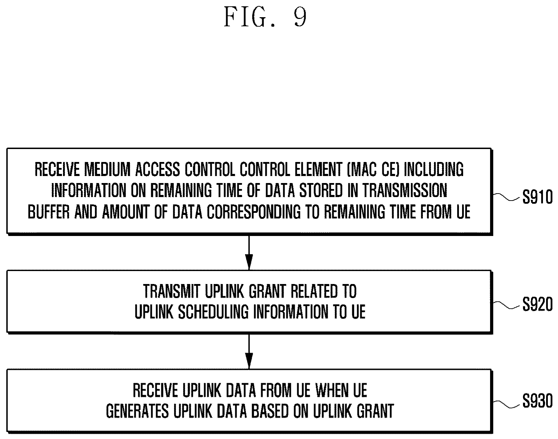

Meanwhile, FIG. 9 is a flowchart illustrating an operation of a base station according to an embodiment of the present disclosure.

In step S910, the MAC CE including the information on the remaining time of data stored in the transmission buffer and the amount of data corresponding to the remaining time may be received from the UE. The MAC CE may be referred to as the delay status report (DSR) MAC CE.

In step S920, the base station may transmit the uplink grant related to the uplink scheduling information to the UE.

In step S930, when the uplink data is generated by the UE based on the uplink grant, the base station may receive the uplink data from the UE.

Meanwhile, according to an embodiment of the present disclosure, the base station may configure, via an RRC message, on a per-LCG basis or on a per-LCH basis, whether to report the remaining time via the DSR for the specific MAC entity (or cell group) of the UE. For example, the LCG/LCH configured to report the remaining time via the DSR may be referred to as dsr-lcg/dsr-lch. For example, the RRC message may include an LCG list/LCH list including LCG/LCH to be configured as dsr-lcg/dsr-lch. For example, when a specific LCG is configured as dsr-lcg, the remaining time reporting through the DSR may be performed for data of all LCHs included in the corresponding LCG. For example, when there is at least one LCG/LCH configured as the dsr-lcg/dsr-lch for the specific MAC entity/cell group, the UE may generate the DSR MAC CE in the corresponding MAC entity/cell group. Conversely, when there is no LCG/LCH configured as the dsr-lcg/dsr-lch for the specific MAC entity/cell group, it may be considered that the UE is configured not to generate the DSR MAC CE in the corresponding MAC entity/cell group.

For example, the base station may configure whether to generate the DSR MAC CE for the specific MAC entity of the UE via the RRC message, using the specific field in the configuration information for the corresponding MAC entity. For example, when the field has a specific value, it may be configured to generate the DSR, and when the field has another value, it may be configured not to generate the DSR. For example, whether to generate the DSR may be configured based on the presence or absence of the field in the RRC message. For example, when the field is present, the DSR may be generated, and when the field is not present, the DSR may be configured not to be generated. For example, when the field is present, the DSR may not be generated, and when the field is not present, the DSR may be configured to be generated.

In an embodiment of the present disclosure, one or more DSR trigger remaining time criteria may be configured in the RRC message on a per-LCG or on a per-LCH basis. For example, when the DSR trigger remaining time criterion is configured on a per-LCG basis, all dsr-lch included in the corresponding LCG or all LCH of the corresponding LCG may be applied with the same remaining time criterion for the DSR trigger. For example, one DSR trigger remaining time criterion may include only the DSR trigger remaining time upper limit, only the DSR trigger remaining time lower limit, or both the DSR trigger remaining time upper limit and lower limit. For example, when the DSR trigger remaining time criterion of the specific LCG/LCH includes only the remaining time upper limit, if the remaining time of the data (PDU set or PDU) of the corresponding LCG/LCH is less than or equal to the remaining time upper limit, the corresponding data may be considered to satisfy the DSR trigger remaining time criterion. For example, when the DSR trigger remaining time criterion of the specific LCG/LCH includes only the remaining time lower limit, if the remaining time of the data (PDU set or PDU) of the corresponding LCG/LCH is greater than or equal to the remaining time lower limit, the corresponding data may be considered to satisfy the DSR trigger remaining time criterion. For example, when the DSR trigger remaining time criterion of the specific LCG/LCH includes both the remaining time upper limit or lower limit, if the remaining time of the data (PDU set or PDU) of the corresponding LCG/LCH is less than or equal to the remaining time upper limit and greater than or equal to the remaining time lower limit, the corresponding data may be considered to satisfy the DSR trigger remaining time criterion.

In an embodiment of the present disclosure, the base station may configure, via the RRC message, one or more LCGs/LCHs as dsr-lcg or dsr-lch by a scheme that configures, on a per-LCG/LCH basis, one or more DSR trigger remaining time criteria for one or more LCG/LCH. For example, when the base station configures at least one LCG/LCH as dsr-lcg/dsr-lch for a specific MAC entity/cell group, the UE may generate the DSR MAC CE in the corresponding MAC entity/cell group. On the other hand, when there is no LCG/LCH for which the DSR trigger remaining time criterion is configured for the specific MAC entity/cell group, the UE may not generate the DSR MAC CE in the corresponding MAC entity/cell group.

At the specific point in time, when the remaining time for all PDUs included in the specific PDU set may be calculated using the remaining PDU set delay budget (PSDB) or the remaining access network (AN) PSDB of the PDU set at the corresponding point in time, or may be as a value obtained by applying a specific offset to the corresponding remaining time value. The offset may be defined in advance or may be configured by the base station via the RRC.

For example, the PSDB of the specific QoF flow may be defined as follows:
- The PDU set Delay Budget (PSDB) defines an upper limit for the delay that a PDU set may experience for the transfer between the UE and the N6 termination point at the UPF, i.e. the duration between the reception time of the first PDU (at the N6 termination point for DL or the UE for UL) and the time when all PDUs of a PDU set have been successfully received (at the UE for DL or N6 termination point for UL).

In an embodiment of the present disclosure, the access network (AN) PSDB of the specific QoS flow may be calculated as a value obtained by subtracting the core network (CN) PDB of the corresponding QoS flow from the PSDB of the corresponding QoS flow.

When the MAC of the UE requests the RLC entity or PDCP entity for the size of data that satisfies the specific remaining time criterion (e.g., the remaining time upper limit, the remaining time lower limit, or both the remaining time upper limit or lower limit) and when the RLC entity or PDCP entity calculates the size of data that satisfies the corresponding remaining time criterion, a data unit (e.g., a PDCP SDU, a PDCP PDU, an RLC SDU, an RLC PDU, an RLC SDU segment) that includes data for which the PDCP discardTimer is not configured or is configured to infinity may not be included in the corresponding data size. For example, since the PDCP control PDU may not be configured with the discardTimer, the data unit including the corresponding data may be excluded when the PDCP or RLC entity calculates the size of data that satisfies the remaining time criterion. For example, the data unit including data corresponding to a signaling radio bearer (SRB) for which the discardTimer is not configured or data corresponding to a data radio bearer (DRB) for which the discardTimer is configured to infinity may be excluded when calculating, in the RLC or PDCP entity, the size of data satisfying the remaining time criterion. For example, in the case of the RLC AM, the UE may exclude the size of data pending for RLC retransmission when calculating the size of data satisfying the specific remaining time criterion reported via the DSR.

According to an embodiment, for a specific dsr-lcg, the condition under which the DSR is triggered may be at least one of the following conditions:
- When the data satisfying the DSR trigger remaining time criterion of the corresponding LCG is generated in a dsr-lch belonging to a specific dsr-lcg, and the DSR has not yet been triggered for the corresponding dsr-lcg, the DSR may be triggered for the corresponding dsr-lcg.
- The data satisfying the DSR trigger remaining time criterion of the corresponding LCG is generated in the dsr-lch belonging to the specific dsr-lcg. In this case, when there is no data satisfying the corresponding criteria in the buffers of all dsr-lchs in the corresponding dsr-lcg, the DSR may be triggered for the corresponding dsr-lcg.
- When the data satisfying the DSR trigger remaining time criterion of the corresponding LCG is generated in the dsr-lch belonging to the specific dsr-lcg, and the LCH priority level of the corresponding dsr-lch is higher than the LCH priority levels of other dsr-lchs that satisfy the corresponding remaining time criterion of the corresponding dsr-lcg, the DSR may be triggered for the corresponding dsr-lcg.
- When the data satisfying the DSR trigger remaining time criterion of the corresponding LCG is generated in the dsr-lch belonging to the specific dsr-lcg and the remaining time of the corresponding data is less than or less than or equal to the remaining time of the data satisfying the corresponding criterion of other dsr-lchs of the corresponding dsr-lcg, the DSR may be triggered for the corresponding dsr-lcg.

Methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage medium are configured to be executable by one or more processors in an electronic device. One or more programs include instructions for causing an electronic device to execute methods according to embodiments described in a claim or specification of the present disclosure.

Such programs (software modules, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile Discs (DVDs), any other form of optical storage device, and a magnetic cassette. Alternatively, it may be stored in a memory composed of a combination of some or all thereof. In addition, each memory component may be included in plural.

In addition, the program may be stored in an attachable storage device that may accessed via a communication network such as the Internet, the Intranet, a local area network (LAN), wide LAN (WLAN), or a storage area network (SAN), or a combination thereof. Such a storage device may be connected to a device implementing an embodiment of the present disclosure via an external port. In addition, a separate storage device on the communication network may be connected to the device implementing the embodiment of the present disclosure.

In the specific embodiments of the present disclosure described above, components included in the disclosure are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the components may be configured in plural.

While the present disclosure has been described in connection with the exemplary embodiments thereof, various modifications and variations can be made without departing from the scope of the present disclosure. Therefore, the scope of the present disclosure should be not construed as being limited to the described exemplary embodiments but be defined by the appended claims as well as equivalents thereto.

## Claims

1. A method performed by a terminal in a wireless communication system, the method comprising:
receiving, from a base station, a control message including information on a remaining time for triggering a delay status report (DSR) for a logical channel group (LCG);
triggering the DSR for the LCG based on the information on the remaining time, - a DSR medium access control (MAC) control element (CE) for the triggered DSR including a remaining time field and a buffer size field -; and
transmitting, to the base station, the DSR MAC CE.

2. The method of claim 1, wherein the remaining time field corresponds to a remaining time of a PDCP discard timer with a shortest remaining time among at least one running PDCP discard timer for any LCG.

3. The method of claim 1, wherein the buffer size field corresponds to an amount of data associated with a RLC entity and a PDCP entity determined based on the information on the remaining time.

4. The method of claim 3, wherein the amount of data associated with the RLC entity is determined based on at least one RLC SDU and RLC SDU segment that are not assembled into an RLC data PDU and satisfy a condition based on the information on the remaining time in relation to a value of a PDCP discard timer, and the RLC data PDU that includes at least one RLC SDU and RLC SDU segment satisfying the condition based on the information on the remaining time in relation to the value of the PDCP discard timer and is pending for initial transmission.

5. The method of claim 3, wherein the amount of data associated with the PDCP entity is determined based on a PDCP SDU that is not assembled into a PDCP data PDU and satisfies a condition based on the information on the remaining time in relation to a value of a PDCP discard timer, and the PDCP data PDU that is not transmitted to a lower layer and includes the PDCP SDU satisfying the condition based on the information on the remaining time in relation to the value of the PDCP discard timer.

6. The method of claim 1, wherein the DSR MAC CE further includes an LCG indicator indicating an LCG corresponding to the remaining time field and the buffer size field, and the information on the remaining time is in units of milliseconds.

7. A method performed by a base station in a wireless communication system, comprising:
transmitting, to a terminal, a control message including information on a remaining time for triggering a delay status report (DSR) for a logical channel group (LCG); and
receiving, from the terminal, a DSR medium access control (MAC) control element (CE) including a remaining time field and a buffer size field, when the DSR for the LCG is triggered based on the information on the remaining time,
wherein the remaining time field corresponds to a remaining time of a PDCP discard timer with a shortest remaining time among at least one running PDCP discard timer for any LCG, and
the buffer size field corresponds to an amount of data associated with a RLC entity and a PDCP entity determined based on the information on the remaining time.

8. A terminal in a wireless communication system, comprising:
a transceiver; and
a controller configured to receive, through the transceiver, from a base station, a control message including information on a remaining time for triggering a delay status report (DSR) for a logical channel group (LCG);
control triggering of the DSR for the LCG based on the information on the remaining time, - a DSR medium access control (MAC) control element (CE) for the triggered DSR including a remaining time field and a buffer size field -; and
control transmission of the DSR MAC CE to the base station through the transceiver.

9. The terminal of claim 8, wherein the remaining time field corresponds to a remaining time of a PDCP discard timer with a shortest remaining time among at least one running PDCP discard timer for any LCG.

10. The terminal of claim 8, wherein the buffer size field corresponds to an amount of data associated with a RLC entity and a PDCP entity determined based on the information on the remaining time.

11. The terminal of claim 10, wherein the amount of data associated with the RLC entity is determined based on at least one RLC SDU and RLC SDU segment that are not assembled into an RLC data PDU and satisfies a condition based on the information on the remaining time in relation to a value of a PDCP discard timer, and
the RLC data PDU that includes at least one RLC SDU and RLC SDU segment satisfying the condition based on the information on the remaining time in relation to the value of the PDCP discard timer and is pending for initial transmission.

12. The terminal of claim 10, wherein the amount of data associated with the PDCP entity is determined based on a PDCP SDU that is not assembled into a PDCP data PDU and satisfies a condition based on the information on the remaining time in relation to a value of a PDCP discard timer, and
the PDCP data PDU that is not transmitted to a lower layer and includes the PDCP SDU satisfying the condition based on the information on the remaining time in relation to the value of the PDCP discard timer.

13. The terminal of claim 8, wherein the DSR MAC CE further includes an LCG indicator indicating an LCG corresponding to the remaining time field and the buffer size field, and
the information on the remaining time is in units of milliseconds.

14. A base station in a wireless communication system, comprising:
a transceiver; and
a controller configured to transmit, through the transceiver, to a terminal, a control message including information on a remaining time for triggering a delay status report (DSR) for a logical channel group (LCG);
control reception, through the transceiver, from the terminal, of a DSR medium access control (MAC) control element (CE) including a remaining time field and a buffer size field, when the DSR for the LCG is triggered based on the information on the remaining time,
wherein the remaining time field corresponds to a remaining time of a PDCP discard timer with a shortest remaining time among at least one running PDCP discard timer for any LCG, and
wherein the buffer size field corresponds to an amount of data associated with a RLC entity and a PDCP entity determined based on the information on the remaining time.

15. The base station of claim 14, wherein the amount of data associated with the RLC entity is determined based on at least one RLC SDU and RLC SDU segment that are not assembled into an RLC data PDU and satisfies a condition based on the information on the remaining time in relation to a value of a PDCP discard timer, and the RLC data PDU that includes at least one RLC SDU and RLC SDU segment satisfying the condition based on the information on the remaining time in relation to the value of the PDCP discard timer and is pending for initial transmission, and
wherein the amount of data associated with the PDCP entity is determined based on a PDCP SDU that is not assembled into a PDCP data PDU and satisfies a condition based on the information on the remaining time in relation to a value of a PDCP discard timer, and the PDCP data PDU that is not transmitted to a lower layer and includes the PDCP SDU satisfying the condition based on the information on the remaining time in relation to the value of the PDCP discard timer.
